# EUROPEAN PATENT APPLICATION

(11) **EP 4 616 929 A1**
(43) Date of publication of application: **17.09.2025**
(21) Application number: 23923273.9
(22) Date of filing: 21.02.2023
(51) Int. Cl.: B01D 67/00, B01D 69/12, B01D 71/56

(54) **POLYAMIDE COMPOSITE MEMBRANE AND PREPARATION METHOD THEREFOR**

(71) Applicant: Wanhua Chemical Group Co., Ltd., Yantai, Shandong 264006 (CN)
(72) Inventor: NI, Fan, Chongqing Street, YEDA Yantai, Shandong 264006 (CN); TANG, Wenyong, Chongqing Street, YEDA Yantai, Shandong 264006 (CN); HAN, Jiwei, Chongqing Street, YEDA Yantai, Shandong 264006 (CN); LIU, Zhao, Chongqing Street, YEDA Yantai, Shandong 264006 (CN); ZHAO, Weiguo, Chongqing Street, YEDA Yantai, Shandong 264006 (CN); SUN, Jiakuan, Chongqing Street, YEDA Yantai, Shandong 264006 (CN); HUA, Weiqi, Chongqing Street, YEDA Yantai, Shandong 264006 (CN)
(74) Representative: Potter Clarkson
(86) International application number: PCT/CN2023/077419
(87) International publication number: WO 2024/174089

(57) **Abstract**

The present application provides a polyamide composite membrane and a preparation method therefor. The preparation method comprises the steps of: 1) mixing a polyfunctional amine containing a halogen atom, a polyfunctional amine and water to obtain an aqueous-phase solution; 2) mixing an amino protective reagent, polyfunctional acyl chloride and a non-polar solvent to obtain an oil-phase solution; 3) coating a base membrane with the aqueous-phase solution, and then making contact with the oil-phase solution for interfacial polymerization reaction to obtain a polyamide composite membrane; 4) placing the polyamide composite membrane in an amino deprotection solution to remove the amino protective reagent; and 5) adding the polyamide composite membrane with the protective reagent removed into an aqueous solution of diazotization reagent for diazotization reaction to generate diazonium salt, and then coupling under an alkaline condition to obtain the polyamide composite membrane. The preparation method of the present application is simple, and the prepared polyamide composite membrane has the advantages of greatly increased water yield and stable desalination rate and capable of withstanding oil pollution, and the industrialization prospect is good.

## Description

### TECHNICAL FIELD

Embodiments of the present application relate to the technical field of membranes, e.g., a polyamide composite membrane and a preparation method therefor.

### BACKGROUND

Polyamide composite membranes are commonly used in fluid filtration membranes, and a typical application is preparation of reverse osmosis membranes disclosed by Cadotte et al. in US4277344: with porous polysulfone as a supporting layer, a membrane is first immersed in an aqueous-phase polyamine solution (usually containing m-phenylenediamine, 1,3,5-benzenetriamine, piperazine, aliphatic amine, polyether amine, etc.), and then coated with an alkane solution of polyacyl chloride (usually containing trimesoyl chloride, isophthaloyl chloride, terephthaloyl chloride, etc.), and an ultra-thin polyamide layer is obtained through an interfacial polymerization reaction. This functional layer only allows water molecules to pass through, while salt ions are intercepted. It is widely used in fields such as seawater desalination, brackish water desalination, and sewage treatment.

After long-term operation, the polyamide membranes inevitably accumulate foulant on the surfaces, leading to a decrease in water yield of the membranes, among which oil pollution is a common pollutant in industrial wastewater. In order to reduce the pollution of the polyamide membranes caused by oil pollution, in CN101432058B, a method of synthesizing a copolymer of a hydrophilic polyethylene oxide molecular brush and then grafting it onto a surface of a polyamide membrane is adopted, the oil pollution resistance is improved. However, the synthesis steps of the molecular brush are complex, and a resulting coating has a huge impact on the water yield of the polyamide membrane. The water yield of the membrane coated with the molecular brush decreases by 50%. Therefore, it is an urgent problem to improve the oil pollution resistance without losing flux.

A method of using a diazotization reagent to improve the chlorine resistance and flux of a composite membrane is first introduced in US4888116 and improved in CN102781560. Boron removal and water permeability are further improved, but additional processes are introduced, including a process of contacting a separation layer with a primary amine compound and a process of contacting with reagents that react with diazonium salts or their derivatives. The operation is complex and the production control is difficult. Its guiding significance lies in using a yellow index as a characterization index of the degree of reaction of the separation layer. The larger the yellow index, the higher the degree of a coupling reaction of diazonium salts. CN105848765 introduces a trialkyl/aryl phosphate compound into an aqueous phase and/or an oil phase, followed by a diazotization reaction. A response ratio of 212m/z and 237m/z fragments in pyrolysis GC-MS results of the obtained separation layer at 650°C in a flame ionization detector is used as an indicator of a relative conversion rate of the separation layer. The higher a dimer ratio, the more low-branched network structures exist, and the higher the water flux. The theory of this scheme is based on first obtaining a more open polyamide network, and then refining a pore structure through the diazotization reaction. This scheme also has strict requirements for controlling the diazotization reaction, making production control difficult.

There is no report in literature on a method of direct application of halogen-substituted polyamines and amino protecting reagents in an interfacial polymerization reaction. The main reason is that a halogen-substituted membrane has stronger hydrophobicity and lose membrane flux, while the introduction of amino protecting reagents in interfacial polymerization results in some ammonia being unable to react and cross-link with acyl chloride. Polyamide chains are capped, reducing the degree of polymer cross-linking and losing a desalination rate of the membrane.

### SUMMARY OF THE INVENTION

The following is an overview of the subject matter described in detail herein. This overview is not intended to limit the scope of protection of the claims.

Embodiments of the present application provide an improved polyamide composite membrane and a preparation method therefor. The polyamide composite membrane described in the embodiments of the present application has excellent flux and desalination rates as well as oil pollution resistance, and may be used in fluid filtration desalination.

The inventor of the present application has discovered through intensive research that the cooperative use of halogen-substituted polyamines and amino protecting reagents, as well as the introduction of a diazotization cross-linking reaction, can solve the above-mentioned problems. On the one hand, the amino protecting reagents provide a large number of reaction amino sites for the diazotization cross-linking reaction, generating a polyamide network with a higher cross-linking degree. On the other hand, through the diazotization reaction, a polyamide structure is reconstructed, so that the halogen-substituted polyamines are redistributed inside a polymer network. The final polyamide composite membrane not only has a higher water yield, but also has a higher desalination rate and better oil pollution resistance.

The technical solution adopted by the embodiments of the present application is as follows.

The polyamide composite membrane has a polyamide separation layer on a porous supporting layer, wherein the polyamide separation layer has the following characteristics:
a) a ratio of the response signal integral areas of a dimer structure shown in Formula I and a dimer structure shown in Formula II during pyrolysis at 650°C measured by gas chromatograph and mass spectrometry (GC-MS) is 4.5% to 10%, preferably 6% to 8%, 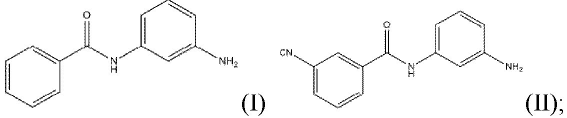
b) a yellow index is 15 to 40, preferably 25 to 35; and
c) a surface halogen atom content measured by XPS is 0.15 mol% to 1 mol%, preferably 0.25 mol% to 0.75 mol%.

The embodiments of the present application further provide a method for preparing a polyamide composite membrane. The method may be used to prepare the above polyamide composite membrane, and includes the following steps:
1) mixing a polyfunctional amine containing a halogen atom, a polyfunctional amine and water to obtain an aqueous-phase solution;
2) mixing an amino protecting reagent, polyfunctional acyl chloride and a non-polar solvent to obtain an oil-phase solution;
3) coating a base membrane with the aqueous-phase solution, and then making contact with the oil-phase solution for an interfacial polymerization reaction to obtain a polyamide composite membrane;
4) immersing the polyamide composite membrane in an amino deprotection solution to remove the amino protecting reagent; and
5) immersing the polyamide composite membrane with the amino protecting reagent removed in an aqueous solution of a diazotization reagent for a diazotization reaction to generate a diazonium salt and then coupling under an alkaline condition to obtain the polyamide composite membrane.

In step 1) of the present application, functionality of the polyfunctional amine is 2 to 4; the polyfunctional amine is selected from one or more of an aromatic polyamine and an aliphatic polyamine, the aromatic polyamine is selected from one or more of m-phenylenediamine, p-phenylenediamine, and 1,3,5-triaminobenzene, and the aliphatic polyamine is selected from one or more of ethylenediamine, piperazine, diethylenetriamine, and triethylenetetramine; and the polyfunctional amine is preferably m-phenylenediamine.

A concentration of the polyfunctional amine in the aqueous-phase solution is 1 wt% to 8 wt%, preferably 1.5 wt% to 3.5 wt%.

The polyfunctional amine containing the halogen atom may be a mixture of one or more substances, and may be 4-(trifluoromethoxy)-m-phenylenediamine, 3,5-diaminobenzotrifluoride, 4-chloro-1,3-phenylenediamine, and 5-chloro-1,3-phenylenediamine, preferably 4-(trifluoromethoxy)-m-phenylenediamine.

A concentration of the polyfunctional amine containing the halogen atom in the aqueous-phase solution is 0.1 wt% to 3 wt%, preferably 1 wt% to 2.5 wt%.

In step 2) of the present application, functionality of the polyfunctional acyl chloride is not less than 2, preferably 2 to 3, and the polyfunctional acyl chloride is selected from one or more of terephthaloyl chloride, isophthaloyl chloride, naphthalene-2,6-dicarbonyl chloride, trimesoyl chloride, 1,3,5-cyclohexanetricarbonyl chloride, and 1,2,4-cyclobutanetricarbonyl chloride, preferably trimesoyl chloride.

A concentration of the polyfunctional acyl chloride in the oil-phase solution is 0.08 wt% to 0.6 wt%, preferably 0.1 wt% to 0.3 wt%.

The amino protecting reagent is a mixture of one or more of trifluoroacetic anhydride, di-tert-butyl dicarbonate, triphenylmethyl chloride, and 9-fluorenylmethyl chloroformate.

A concentration of the amino protecting reagent in the oil-phase solution is 0.01 wt% to 10 wt%, preferably 0.05 wt% to 2 wt%.

In step 2) of the present application, the non-polar solvent is selected from one or more of C6-C12 normal alkanes, C6-C12 branched alkanes, and C6-C12 aromatic solvents; preferably, the normal alkanes are selected from hexane, octane, nonane, and decane, the branched alkanes are selected from Isopar E, Isopar G, and Isopar L, and the aromatic solvents are selected from toluene, xylene, and trimethylbenzene; and the non-polar solvent is more preferably Isopar G.

In the present application, a ratio of a mass concentration of the polyfunctional amine in the aqueous-phase solution in step 1) to a mass concentration of the polyfunctional acyl chloride in the oil-phase solution in step 2) is preferably (10-40):1, preferably (15-30):1.

In the present application, a coating manner in step 3) is selected from dip-coating, slit-coating, spray-coating or curtain-coating.

In the interfacial polymerization reaction in step 3) of the present application, a reaction temperature is 20°C to 30°C, and reaction time is 0.5 min to 5 min, preferably 1 min to 2 min.

Preferably, the base membrane is coated with the aqueous-phase solution, and after an excess aqueous phase is removed, the base membrane makes contact with the oil-phase solution for the interfacial polymerization reaction. After the completion of the interfacial reaction, an excess oil phase is removed before proceeding to the next step of reaction. The excess oil phase may be removed using conventional methods such as an air knife, a water knife, or an oven, preferably by the oven method. The temperature of the oven is preferably 50°C to 110°C, and drying time is 20 s to 120 s. After the oil phase is removed, the membrane is washed with water to remove residual aqueous-phase and oil-phase solutions.

In the present application, in the interfacial polymerization reaction in step 3), in order to regulate a reaction rate and the performance of a final product, a temperature of a solvent phase involved in the reaction may be changed, time of the interfacial polymerization reaction may be controlled, and additives may also be added to the reaction, such as an acid binding agent (such as sodium hydroxide, camphor sulfonic acid, and a triethylamine salt), a solubilizer (such as toluene), a complexing agent (such as phosphate compounds), and a moisturizing agent (such as glycerol). The above-mentioned additives may be added into the aqueous-phase solution or the oil-phase solution, and their types and amounts are commonly selected in this field, which are not specifically limited in the present application.

As preferred, a scheme adopted by the aqueous-phase solution in the embodiment of the present application is that, based on total mass of 100% of the aqueous-phase solution, the aqueous-phase solution may further include 1 wt% to 6 wt% of camphor sulfonic acid and 0.5 wt% to 3 wt% of triethylamine.

The base membrane in step 3) of the present application is selected from a porous supporting membrane supported by non-woven fabric, and includes a non-woven fabric layer and a porous supporting layer.

The non-woven fabric layer is preferably polyester non-woven fabric with a thickness of 80 µm to 110 µm, and a preferred air permeability of 0.5 cm³/cm²/s to 2.5 cm³/cm²/s (referring to JIS L 109-A for a testing method).

The porous supporting layer has a thickness of 30 µm to 60 µm and a surface pore diameter of about 10 nm to 50 nm. A polymer material of the porous supporting layer is selected from one or more of polysulfone, polyethersulfone, polyphenylsulfone, polyphenylene sulfide, polyphenylene ether, polyphenylsulfone sulfide, polyamide, polyimide, polyester, vinyl polymers, and cellulose-based polymers. Preferably, the vinyl polymers are selected from polyethylene, polypropylene, polyvinyl chloride and polyacrylonitrile. The cellulose-based polymers are selected from cellulose acetate and cellulose nitrate. The polymer material is more preferably polysulfone.

The base membrane used in the present application is a product disclosed in the related art, which can be purchased or self-made. There is no special requirement for its source in the present application, for example, among commercially available products, a US050 membrane produced by Sinoscience Rainyoung Membrane Technology (Beijing) Co., Ltd., may be used; and for example, a self-made membrane may be prepared according to methods disclosed in the references: Wang Yushuang et al., Preparation and Study of Reverse Osmosis Base Membranes, Petrochemical Industry Application, 2019, 38(12): 4, and Tian Xinxia's 2015 PhD dissertation "Base Membrane Modulation and Its Impact on Composite Membrane Structure and Performance", Tianjin University.

As preferred, the porous supporting layer may obtain an asymmetrical pore structure through wet phase inversion, and in some examples, a specific preparation method of the base membrane in the present application is that:
a polymer is dissolved in a polar solvent to obtain a polymer solution with a concentration of 15 wt% to 20 wt%, after defoaming and filtering, non-woven fabric is coated with the polymer solution and then immersed in pure water to complete curing at the room temperature (a curing temperature is 5°C to 30°C, preferably 10°C to 25°C), and a cured product is rinsed with pure water to obtain the porous supporting layer.

The polar solvent is selected from one or more of N,N-dimethylformamide, N,N-dimethylacetamide, and N-methylpyrrolidone, preferably N,N-dimethylformamide; and optionally, the polar solvent may also include a pore forming agent, as well as ethylene glycol methyl ether, water, polyethylene glycol, etc.

In step 4) of the present application, the polyamide composite membrane is immersed in the amino deprotection solution to remove the amino protecting reagent, wherein different amino protecting reagents correspond to different removal steps.

When the amino protecting reagent is the trifluoroacetic anhydride and the 9-fluorenylmethyl chloroformate, a removal solution is an alkaline aqueous solution in a pH range of 11.5 to 12.5, a pH value is adjusted by one or more of sodium hydroxide, sodium carbonate, piperidine and diethylamine, a removal temperature is 40°C to 90°C, and removal time is 0.5 to 2 minutes.

When the amino protecting reagent is the di-tert-butyl dicarbonate and the triphenylmethyl chloride, the removal solution is an acidic aqueous solution in a pH range of 1 to 2, a pH value is adjusted by one or more of hydrochloric acid, sulfuric acid, acetic acid and trifluoroacetic acid, a removal temperature is 60°C to 90°C, and removal time is 0.5 to 2 minutes.

In step 5) of the present application, the diazotization reagent is nitrous acid, as the nitrous acid is unstable at the normal temperature, the diazotization reagent is preferably generated by mixing an alkali metal salt of the nitrous acid (e.g., sodium nitrite or potassium nitrite) with an organic acid and/or inorganic acid; and the organic acid is selected from citric acid, p-toluenesulfonic acid, and tartaric acid, preferably citric acid, and the inorganic acid is selected from hydrochloric acid, sulfuric acid, and phosphoric acid, preferably sulfuric acid.

In the aqueous solution of the diazotization reagent, a concentration of the alkali metal salt of the nitrous acid is 0.1 wt% to 0.4 wt%, and a pH value is 1.5 to 3.5 after the acid is added.

In the diazotization reaction in step 5) of the present application, a temperature is 4°C to 35°C, preferably 20°C to 30°C, and time is 30 s to 200 s, preferably 60 s to 120 s.

In a coupling reaction in step 5) of the present application, a temperature is 10°C to 40°C, preferably 20°C to 30°C, and time is 30 s to 200 s, preferably 60 s to 120 s. A pH value of a system is adjusted by a base in a reaction process to 8 to 11, preferably 9 to 10, the base adopted to adjust pH is selected from an organic base and/or an inorganic base, the organic base is selected from triethylamine and N,N-dimethylaniline, preferably triethylamine, and the inorganic base is selected from sodium carbonate and sodium hydroxide, preferably sodium hydroxide.

After the coupling reaction in step 5) of the present application is completed, pure water rinsing and drying treatment are further included. An obtained wet membrane is rinsed clean with pure water and then moisturized with a moisturizing agent (such as glycerol), and then the membrane is fed into an oven to be dried.

According to the polyamide composite membrane of the present application, by characterizing the dimer ratio, it can be known that an obtained polyamide layer is more loose, by characterizing the yellow index, it can be known that most of the diazonium salts in the present application participate in coupling, generating a cross-linked network with an extended conjugated structure, and by characterizing the halogen atom content in the polyamide layer, it can be known that hydrophobic halogen atoms are introduced into the polyamide structure.

In related art, by controlling the appropriate dimer ratio and yellow index, it is possible to ensure both high membrane desalination rates and flux. However, in order to obtain good pollution resistance, further sacrifice of the membrane flux is required. Through intensive research, the applicant found that by introducing the aqueous-phase halogen-containing polyamine and the oil-phase amino protecting reagent, the polyamide layer with a relatively open structure, high porosity, and halogen atoms is obtained. In cooperation with the subsequent protecting reagent removal step and the diazotization coupling reaction, the polyamide separation layer structure is reconstructed, and the pore size is reduced. On the one hand, the membrane flux and desalination rates are simultaneously improved. On the other hand, it is unexpectedly discovered that the pollution resisting effect of the membrane obtained is significantly improved.

Compared with the related art, the technical solution of the embodiments of the present application has the following beneficial effects:
In the embodiments of the present application, the polyamide composite membrane is obtained by mixing the amino protecting reagent with the oil solution of the polyfunctional acyl chloride first, uniformly mixing the polyamine containing halogen with the aqueous solution of the polyfunctional amine, and preparing the polyamide layer via the reaction, followed by protecting reagent removal, diazotization and coupling. The preparation method is simple, the prepared polyamide composite membrane has not only a greater water yield, but also the higher desalination rate, the oil pollution resistance of the membrane is also greatly improved, and the industrialization prospect is good.

Other aspects can be understood after reading and understanding the detailed description.

### DETAILED DESCRIPTION

To better understand the technical solution of the present application, the content of the present application is further clarified below in conjunction with examples, but the content of the present application is not only limited to the following examples.
I. In the various examples and comparative examples of the present application, the sources of main raw materials are as follows, and unless otherwise specified, all materials are obtained through standard commercial channels:
   Polysulfone: purchased from Shanghai Kain Industrial Co., Ltd., acting as a distributor for BASF Germany's Ultrason S6010 polysulfone;
   Polyester non-woven fabric (thickness of 90 µm, air permeability of 2.1 cm³/cm²/s): purchased from Coreshine (Shanghai) Advanced Materials Technology Co., Ltd., acting as a distributor for Awa Paper Japan's KS7709 non-woven fabric;
   Polysulfone base membrane, preparation method: polysulfone is dissolved in N,N-dimethylformamide to prepare a solution with a solid content of 18 wt%, a surface of non-woven fabric is coated with the polysulfone solution using a 250 µm thick wet membrane preparation device, after 4 to 5 seconds of air exposure, the non-woven fabric is immersed in room-temperature pure water for 5 minutes to complete phase inversion, a polysulfone base membrane to which phase inversion is completed is immersed in room-temperature pure water which is replaced every 2 hours to fully wash off residual solvents, and then a polysulfone base membrane having a porous supporting layer and supported by the non-woven fabric (the porous supporting layer has a thickness of 50 µm and a surface pore diameter of about 30 nm) is obtained and cut for standby use;
   4-(trifluoromethoxy)-m-phenylenediamine: purchased from Hangzhou Hairui Chemical Co., Ltd.;
   5-chloro-1,3-phenylenediamine: purchased from Shanghai Yuanye Bio-Technology Co., Ltd.;
   Other reagents are all reagent-grade raw materials purchased from TCI Chemicals (Shanghai) Industry Development Co., Ltd. unless otherwise specified.
II. Test methods for polyamide membranes in examples and comparative examples:
   Test method for desalination rate and flux: referring to a test method for a desalination rate and flux in GB/T 32373-2015 "Test Methods for Reverse Osmosis Membranes", a temperature of a test solution is 25°C, a pH value is 7.0, the test solution is a 1500 ppm sodium chloride aqueous solution, and a test pressure is 1.03 MPa.

Test method for oil pollution resistance: first, a membrane is operated in a 2000 ppm sodium chloride aqueous solution at 25°C and 1.55 MPa to detect flux and a desalination rate, then 100 ppm dodecane and 50 ppm sodium dodecyl sulfate (simulating oil pollution) are added into the test solution, and after 100 hours' of continuous operation, a flux decline rate is calculated by comparing the flux before and after pollution.

### Test method for dimer ratio:

Extraction of polyamide layer: non-woven fabric and a porous supporting layer of a polyamide composite membrane are separated, for the remaining supporting layer and a polyamide layer, by adopting a solvent immersion manner, polysulfone is dissolved and then removed, and the polyamide layer is obtained after filtration. In order to remove the polysulfone as sufficient as possible, in this scheme, N,N-dimethylformamide (DMF) is used as a solvent, a sample with non-woven fabric removed is added into the DMF and stirred to dissolve the polysulfone, an undissolved polyamide separation layer is obtained after filtration, methanol is dropwise added to a surface of the polyamide separation layer, if white polysulfone flocs precipitate out, they are re-dissolved by stirring with fresh DMF and filtered, and methanol is dropwise added for verification, until no polysulfone floc precipitates out. The sample is cleaned with methanol until a DMF content in an eluent is lower than 1 ppm. The sample is transferred to a vacuum oven and vacuum-dried at 150°C for 24 hours to obtain the polyamide separation layer to be tested.

Pyrolysis-gas chromatography/mass spectrometry: peak areas of fragments are detected by gas chromatography/mass spectrometry using a Frontier Lab EGA/PY-3030D pyrolyzer in cooperation with Shimadzu GC-MS-QP2020. A model of a chromatographic column is DB-5MSUI 30 m * 0.25 mm * 0.25 µm, a pyrolysis temperature is 650°C, an injector temperature is 280°C, and a reflux ratio is 50:1. A gas chromatography temperature rise program is as follows: a temperature is increased from 50°C to 80°C at 5°C/min, then increased from 80°C to 300°C at 15°C/min, and held for 15 min at 300°C. Helium gas of 1 mL/min is used as carrier gas. The peak areas of fragments 212m/z and 237m/z are normalized to sample weights, and the normalized peak areas are used to determine a ratio of the fragment 212m/z to the fragment 237m/z. The normalized peak area of the fragment 212m/z is divided by the sum of normalized peak areas of all other fragments to provide a fractional amount of this fragment relative to polyamide. This method is used to determine a dimer content reported for samples in the Examples section.

### Test method for yellow index:

Non-woven fabric and a porous supporting layer of a polyamide composite membrane are separated, leaving a supporting layer and a polyamide layer. The polyamide layer is placed face-down on a glass plate. A solvent immersion manner is adopted to dissolve and remove polysulfone. Since residual amines may also develop colors upon oxidation, N,N-dimethylformamide (DMF) is adopted as a solvent in this scheme to remove polysulfone and free color-developing impurities as sufficient as possible. The sample on the glass plate is rinsed with DMF. To verify complete removal of the polysulfone, methanol is dropwise added to a surface of a polyamide separation layer. If white polysulfone flocs precipitate out, the sample is rinsed again with fresh DMF, followed by dropwise adding of methanol for verification, until no polysulfone floc precipitates out. The sample is cleaned with methanol until a DMF content in an eluent is lower than 1 ppm. The sample is transferred to a vacuum oven and vacuum-dried at 150°C for 24 hours, and a glass plate loaded with the polyamide separation layer to be tested is obtained. A yellow index of the separation layer may be determined by measuring transmittance using a Hunter Lab VIS colorimeter. The test method refers to the ASTM E313C standard.

### Content of halogen atoms:

A membrane is immersed and cleaned in pure water and then dried, and an element content on a surface of the dried membrane is tested using an X-ray photoelectron spectrometer (ThermoFischer, ESCALAB 250Xi, USA). A vacuum degree in an analytical chamber is 4×10⁻⁹ mbar, Al Ka rays (hv = 1486.6 eV) are used as an excitation source, a working voltage is 14.6 kV, a filament current is 13.5 mA, and 20-cycle signal accumulation is performed. Passing-energy during testing is 20 eV with a step size of 0.1 eV. Charge correction is performed using C1s = 284.8 eV binding energy as an energy standard. The contents of C, N, O, F, Cl, Br and I are determined respectively. The content of halogen atoms is the sum of molar ratios of four elements F, Cl, Br and I to all detected elements mentioned above.

### Example 1

Preparation of polyamide composite membrane. The steps were as follows.
1) M-phenylenediamine, 4-(trifluoromethoxy)-m-phenylenediamine, camphor sulfonic acid, triethylamine and water were mixed to obtain an aqueous-phase solution, wherein the concentrations of the respective components were: 4 wt% of m-phenylenediamine, 1 wt% of 4-(trifluoromethoxy)-m-phenylenediamine, 3 wt% of camphor sulfonic acid and 1.5 wt% of triethylamine.
2) Trimesoyl chloride, trifluoroacetic anhydride and Isopar G were mixed to obtain an oil-phase solution, wherein the concentrations of the respective components were: 0.15 wt% of trimesoyl chloride, and 0.05 wt% of trifluoroacetic anhydride.
3) At the room temperature of 20°C, a well-cut polysulfone base membrane was pasted on a plate frame which was in a square shape with a side length of 10 cm and a thickness of about 8 mm, 20 ml aqueous-phase solution was poured to a surface of the polysulfone base membrane defined by the plate frame, after 5 minutes, the aqueous-phase solution in the plate frame was dumped, an excess aqueous phase on the surface of the base membrane was removed by squeezing via a rubber roller, then 20 ml oil-phase solution was poured to the surface of the polysulfone base membrane, an interfacial polymerization reaction was carried out at 25°C for 1 min, then an excess oil phase was dumped, and the base membrane was dried in a 60°C blasting oven for 1 min, and then rinsed in pure water to obtain a polyamide composite membrane.
4) The polyamide composite membrane was immersed in a sodium carbonate aqueous solution with a pH value of 12 and at a temperature of 70°C for 2 min to complete the step of removing a protecting reagent, and then the membrane was rinsed in pure water to obtain a polyamide composite membrane with the protecting reagent removed.
5) The polyamide composite membrane with the protecting reagent removed was immersed in a sodium nitrite aqueous solution with a concentration of 0.3 wt%, a pH value of a system was adjusted to 2.5 by citric acid, a diazotization reaction was carried out at 25°C for 80 s to generate a diazonium salt, then the diazonium salt was added into a 20°C alkaline aqueous solution whose pH was adjusted to 10 by sodium hydroxide to carry out a coupling reaction for 90 s, and a membrane obtained after the completion of the reaction was rinsed with pure water, then moisturized using glycerol and dried in an oven to prepare a polyamide composite membrane, wherein its performance testing results were as shown in Table 1.

### Example 2

Preparation of polyamide composite membrane. The steps were as follows.
1) M-phenylenediamine, 3,5-diaminobenzotrifluoride, camphor sulfonic acid, triethylamine and water were mixed to obtain an aqueous-phase solution, wherein the concentrations of the respective components were: 1 wt% of m-phenylenediamine, 0.1 wt% of 3,5-diaminobenzotrifluoride, 6 wt% of camphor sulfonic acid and 3 wt% of triethylamine.
2) Trimesoyl chloride, triphenylmethyl chloride and a non-polar solvent Isopar G were mixed to obtain an oil-phase solution, wherein the concentrations of the respective components were: 0.08 wt% of trimesoyl chloride, and 10 wt% of triphenylmethyl chloride.
3) At the room temperature of 20°C, a well-cut polysulfone base membrane was pasted on a plate frame which was in a square shape with a side length of 10 cm and a thickness of about 8 mm, 20 ml aqueous-phase solution was poured to a surface of the polysulfone base membrane defined by the plate frame, after 5 minutes, the aqueous-phase solution in the plate frame was dumped, an excess aqueous phase on the surface of the base membrane was removed by squeezing via a rubber roller, then 20 ml oil-phase solution was poured to the surface of the polysulfone base membrane, an interfacial polymerization reaction was carried out at 30°C for 5 min, then an excess oil phase was dumped, and the base membrane was dried in a 110°C blasting oven for 2 min, and then rinsed in pure water to obtain a polyamide composite membrane.
4) The polyamide composite membrane was immersed in a hydrochloric acid aqueous solution with a pH value of 1 and at a temperature of 60°C for 2 min to complete the step of removing a protecting reagent, and then the membrane was rinsed in pure water to obtain a polyamide composite membrane with the protecting reagent removed.
5) The polyamide composite membrane with the protecting reagent removed was immersed in a potassium nitrite aqueous solution with a concentration of 0.1 wt%, a pH value of a system was adjusted to 3.5 by sulfuric acid, a diazotization reaction was carried out at 4°C for 200 s to generate a diazonium salt, then the diazonium salt was added into a 10°C alkaline aqueous solution whose pH was adjusted to 8 by triethylamine to carry out a coupling reaction for 200 s, and a membrane obtained after the completion of the reaction was rinsed with pure water, then moisturized using glycerol and dried in an oven to prepare a polyamide composite membrane, wherein its performance testing results were as shown in Table 1.

### Example 3

Preparation of polyamide composite membrane. The steps were as follows.
1) M-phenylenediamine, 4-chloro-1,3-phenylenediamine, camphor sulfonic acid, triethylamine and water were mixed to obtain an aqueous-phase solution, wherein the concentrations of the respective components were: 8 wt% of m-phenylenediamine, 3 wt% of 4-chloro-1,3-phenylenediamine, 1 wt% of camphor sulfonic acid and 0.5 wt% of triethylamine.
2) Trimesoyl chloride, di-tert-butyl dicarbonate and a non-polar solvent n-hexane were mixed to obtain an oil-phase solution, wherein the concentrations of the respective components were: 0.6 wt% of trimesoyl chloride, and 2 wt% of di-tert-butyl dicarbonate.
3) At the room temperature of 20°C, a well-cut polysulfone base membrane was pasted on a plate frame which was in a square shape with a side length of 10 cm and a thickness of about 8 mm, 20 ml aqueous-phase solution was poured to a surface of the polysulfone base membrane defined by the plate frame, after 5 minutes, the aqueous-phase solution in the plate frame was dumped, an excess aqueous phase on the surface of the base membrane was removed by squeezing via a rubber roller, then 20 ml oil-phase solution was poured to the surface of the polysulfone base membrane, an interfacial polymerization reaction was carried out at 20°C for 0.5 min, then an excess oil phase was dumped, and the base membrane was dried in a 50°C blasting oven for 20 s, and then rinsed in pure water to obtain a polyamide composite membrane.
4) The polyamide composite membrane was immersed in a sulfuric acid aqueous solution with a pH value of 2 and at a temperature of 90°C for 0.5 min to complete the step of removing a protecting reagent, and then the membrane was rinsed in pure water to obtain a polyamide composite membrane with the protecting reagent removed.
5) The polyamide composite membrane with the protecting reagent removed was immersed in a potassium nitrite aqueous solution with a concentration of 0.4 wt%, a pH value of a system was adjusted to 1.5 by hydrochloric acid, a diazotization reaction was carried out at 35°C for 30 s to generate a diazonium salt, then the diazonium salt was added into a 40°C alkaline aqueous solution whose pH was adjusted to 11 by sodium carbonate to carry out a coupling reaction for 30 s, and a membrane obtained after the completion of the reaction was rinsed with pure water, then moisturized using glycerol and dried in an oven to prepare a polyamide composite membrane, wherein its performance testing results were as shown in Table 1.

### Example 4

Preparation of polyamide composite membrane. The steps were as follows.
1) M-phenylenediamine, 5-chloro-1,3-phenylenediamine, camphor sulfonic acid, triethylamine and water were mixed to obtain an aqueous-phase solution, wherein the concentrations of the respective components were: 4 wt% of m-phenylenediamine, 1.5 wt% of 5-chloro-1,3-phenylenediamine, 1 wt% of camphor sulfonic acid and 0.5 wt% of triethylamine.
2) Trimesoyl chloride, 9-fluorenylmethyl chloroformate and a non-polar solvent dodecane were mixed to obtain an oil-phase solution, wherein the concentrations of the respective components were: 0.1 wt% of trimesoyl chloride, and 0.01 wt% of 9-fluorenylmethyl chloroformate.
3) At the room temperature of 20°C, a well-cut polysulfone base membrane was pasted on a plate frame which was in a square shape with a side length of 10 cm and a thickness of about 8 mm, 20 ml aqueous-phase solution was poured to a surface of the polysulfone base membrane defined by the plate frame, after 5 minutes, the aqueous-phase solution in the plate frame was dumped, an excess aqueous phase on the surface of the base membrane was removed by squeezing via a rubber roller, then 20 ml oil-phase solution was poured to the surface of the polysulfone base membrane, an interfacial polymerization reaction was carried out at 20°C for 1.5 min, then an excess oil phase was dumped, and the base membrane was dried in a 80°C blasting oven for 50 s, and then rinsed in pure water to obtain a polyamide composite membrane.
4) The polyamide composite membrane was immersed in a piperidine aqueous solution with a pH value of 12.5 and at a temperature of 90°C for 0.5 min to complete the step of removing a protecting reagent, and then the membrane was rinsed in pure water to obtain a polyamide composite membrane with the protecting reagent removed.
5) The polyamide composite membrane with the protecting reagent removed was immersed in a sodium nitrite aqueous solution with a concentration of 0.2 wt%, a pH value of a system was adjusted to 2.1 by p-toluenesulfonic acid, a diazotization reaction was carried out at 30°C for 70 s to generate a diazonium salt, then the diazonium salt was added into a 20°C alkaline aqueous solution whose pH was adjusted to 10 by N,N-dimethylaniline to carry out a coupling reaction for 60 s, and a membrane obtained after the completion of the reaction was rinsed with pure water, then moisturized using glycerol and dried in an oven to prepare a polyamide composite membrane, wherein its performance testing results were as shown in Table 1.

### Example 5

Reference was made to the preparation method of Example 4, wherein the difference lay in:
step 1), 5-chloro-1,3-phenylenediamine in the aqueous phase was replaced with 4-(trifluoromethoxy)-m-phenylenediamine, wherein after the replacement, the concentrations of the respective components in the aqueous-phase solution were: 1.5 wt% of m-phenylenediamine, 0.5 wt% of 4-(trifluoromethoxy)-m-phenylenediamine, 1 wt% of camphor sulfonic acid and 0.5 wt% of triethylamine;
step 2), 9-fluorenylmethyl chloroformate in the oil phase was replaced with trifluoroacetic anhydride, wherein after the replacement, the concentrations of the respective components in the oil-phase solution were: 0.15 wt% of trimesoyl chloride, and 0.05 wt% of trifluoroacetic anhydride; and
step 4), the step of removing the protecting reagent was modified as: immersing the polyamide composite membrane in a diethylamine aqueous solution with a pH value of 11.5 and at a temperature of 40°C for 1 min to complete the step of removing the protecting reagent, and then rinsing the membrane in pure water to obtain a polyamide composite membrane with the protecting reagent removed.

The polyamide composite membrane was prepared with other operations remained unchanged, wherein its performance testing results were as shown in Table 1.

### Comparative Example 1

Reference was made to the preparation method of Example 1, wherein the difference lay in: no 4-(trifluoromethoxy)-m-phenylenediamine was added in step 1), no trifluoroacetic anhydride was added in step 2), and the polyamide composite membrane was prepared with other operations remained unchanged, wherein its performance testing results were as shown in Table 1.

### Comparative Example 2

Reference was made to the preparation method of Example 1, wherein the difference lay in: no 4-(trifluoromethoxy)-m-phenylenediamine was added in step 1), and the polyamide composite membrane was prepared with other operations remained unchanged, wherein its performance testing results were as shown in Table 1.

### Comparative Example 3

Reference was made to the preparation method of Example 1, wherein the difference lay in: no trifluoroacetic anhydride was added in step 2), and the polyamide composite membrane was prepared with other operations remained unchanged, wherein its performance testing results were as shown in Table 1.

### Comparative Example 4

Reference was made to the preparation method of Example 1, wherein the difference lay in: step 4) was omitted, and the polyamide composite membrane was prepared with other operations remained unchanged, wherein its performance testing results were as shown in Table 1.

The performance of the membranes was tested, and the results were as shown in Table 1.

**Table 1 Membrane performance testing data**

| | Dimer ratio % | Yellow degree | Content of halogen atoms % | Water yield of membranes LMH | Membrane desalination rate % | Post-pollution flux decrease rate % |
|---|---|---|---|---|---|---|
| Example 1 | 6.1 | 26 | 0.31 | 85.6 | 99.9 | 6.9 |
| Example 2 | 10.0 | 15 | 0.16 | 94.4 | 99.7 | 11.7 |
| Example 3 | 4.5 | 40 | 0.99 | 67.5 | 99.6 | 5.8 |
| Example 4 | 7.8 | 31 | 0.68 | 86.1 | 99.5 | 9.9 |
| Example 5 | 7.4 | 35 | 0.71 | 89.7 | 99.7 | 13.3 |
| Comparat ive Example 1 | 1.8 | 8 | Undetected | 36.0 | 99.3 | 54.2 |
| Comparat ive Example 2 | 5.7 | 28 | 0.07 | 47.4 | 98.4 | 56.3 |
| Comparat ive Example 3 | 2.1 | 10 | 0.35 | 30.4 | 98.7 | 63.1 |
| Comparat ive Example 4 | 11.3 | 9 | 0.46 | 33.2 | 97.2 | 52.1 |

## Claims

1. A polyamide composite membrane, having a polyamide separation layer on a porous supporting layer, **characterized in that** the polyamide separation layer has following characteristics:
a) a ratio of the response signal integral areas of dimer structures represented by Formula I and Formula II during pyrolysis at 650°C measured by GC-MS is 4.5% to 10%, 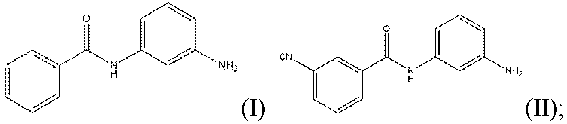
b) a yellow index is 15 to 40; and
c) a surface halogen atom content measured by XPS is 0.15 mol% to 1 mol%.

2. The polyamide composite membrane according to claim 1, **characterized in that** in a), the ratio of the response signal integral areas of the dimer structures represented by Formula I and Formula II during pyrolysis at 650°C is 6% to 8%.

3. The polyamide composite membrane according to claim 1 or 2, **characterized in that** the yellow index in b) is 25 to 35.

4. The polyamide composite membrane according to any one of claims 1 to 3, **characterized in that** the surface halogen atom content in c) is 0.25 mol% to 0.75 mol%.

5. A method for preparing the polyamide composite membrane according to any one of claims 1 to 4, comprising the following steps:
1) mixing a polyfunctional amine containing a halogen atom, a polyfunctional amine and water to obtain an aqueous-phase solution;
2) mixing an amino protecting reagent, polyfunctional acyl chloride and a non-polar solvent to obtain an oil-phase solution;
3) coating a base membrane with the aqueous-phase solution, and then making contact with the oil-phase solution for an interfacial polymerization reaction to obtain a polyamide composite membrane;
4) immersing the polyamide composite membrane in an amino deprotection solution to remove the amino protecting reagent; and
5) immersing the polyamide composite membrane with the amino protecting reagent removed in an aqueous solution of a diazotization reagent for a diazotization reaction to generate a diazonium salt and then coupling under an alkaline condition to obtain the polyamide composite membrane.

6. The method according to claim 5, **characterized in that** in step 1), functionality of the polyfunctional amine is 2 to 4, and the polyfunctional amine is selected from one or more of an aromatic polyamine and an aliphatic polyamine.

7. The method according to claim 6, **characterized in that** the aromatic polyamine is selected from one or more of m-phenylenediamine, p-phenylenediamine, and 1,3,5-triaminobenzene, and the aliphatic polyamine is selected from one or more of ethylenediamine, piperazine, diethylenetriamine, and triethylenetetramine; and the polyfunctional amine is preferably m-phenylenediamine.

8. The method according to any one of claims 5 to 7, **characterized in that** a concentration of the polyfunctional amine in the aqueous-phase solution is 1 wt% to 8 wt%, preferably 1.5 wt% to 3.5 wt%.

9. The method according to any one of claims 5 to 8, **characterized in that** in step 1), the polyfunctional amine containing the halogen atom is selected from one or more of 4-(trifluoromethoxy)-m-phenylenediamine, 3,5-diaminobenzotrifluoride, 4-chloro-1,3-phenylenediamine, and 5-chloro-1,3-phenylenediamine, preferably 4-(trifluoromethoxy)-m-phenylenediamine; and
preferably, a concentration of the polyfunctional amine containing the halogen atom in the aqueous-phase solution is 0.1 wt% to 3 wt%, preferably 1 wt% to 2.5 wt%.

10. The method according to any one of claims 5 to 9, **characterized in that** in step 2), functionality of the polyfunctional acyl chloride is not less than 2, preferably 2 to 3, and the polyfunctional acyl chloride is selected from one or more of terephthaloyl chloride, isophthaloyl chloride, naphthalene-2,6-dicarbonyl chloride, trimesoyl chloride, 1,3,5-cyclohexanetricarbonyl chloride, and 1,2,4-cyclobutanetricarbonyl chloride, preferably trimesoyl chloride; and
preferably, a concentration of the polyfunctional acyl chloride in the oil-phase solution is 0.08 wt% to 0.6 wt%, preferably 0.1 wt% to 0.3 wt%.

11. The method according to any one of claims 5 to 10, **characterized in that** in step 2), the amino protecting reagent is selected from one or more of trifluoroacetic anhydride, di-tert-butyl dicarbonate, triphenylmethyl chloride, and 9-fluorenylmethyl chloroformate; and
preferably, a concentration of the amino protecting reagent in the oil-phase solution is 0.01 wt% to 10 wt%, preferably 0.05 wt% to 2 wt%.

12. The method according to any one of claims 5 to 11, **characterized in that** in step 4), when the amino protecting reagent is the trifluoroacetic anhydride and/or the 9-fluorenylmethyl chloroformate, the amino deprotection solution is an alkaline aqueous solution in a pH range of 11.5 to 12.5, preferably, a base is one or more of sodium hydroxide, sodium carbonate, piperidine and diethylamine, a removal temperature is 40°C to 90°C, and removal time is 0.5 to 2 minutes; and
when the amino protecting reagent is the di-tert-butyl dicarbonate and/or the triphenylmethyl chloride, the amino deprotection solution is an acidic aqueous solution in a pH range of 1 to 2, preferably, an acid is one or more of hydrochloric acid, sulfuric acid, acetic acid and trifluoroacetic acid, a removal temperature is 60°C to 90°C, and removal time is 0.5 to 2 minutes.

13. The method according to any one of claims 5 to 12, **characterized in that** in step 5), the diazotization reagent is nitrous acid, preferably generated by mixing an alkali metal salt of nitrous acid (e.g., sodium nitrite or potassium nitrite) with an organic acid and/or inorganic acid; preferably, the organic acid is selected from citric acid, p-toluenesulfonic acid, and tartaric acid, preferably citric acid, and the inorganic acid is selected from hydrochloric acid, sulfuric acid, and phosphoric acid, preferably sulfuric acid; and
preferably, in the aqueous solution of the diazotization reagent, a concentration of the alkali metal salt of the nitrous acid is 0.1 wt% to 0.4 wt%, and a pH value is 1.5 to 3.5 after the acid is added.

14. The method according to any one of claims 5 to 13, **characterized in that** in the diazotization reaction in step 5), a temperature is 4°C to 35°C, preferably 20°C to 30°C, and time is 30 s to 200 s, preferably 60 s to 120 s.

15. The method according to any one of claims 5 to 14, **characterized in that**, in a coupling reaction in step 5), a temperature is 10°C to 40°C, preferably 20°C to 30°C, and time is 30 s to 200 s, preferably 60 s to 120 s;
preferably, a pH value of a system is adjusted by a base in a reaction process to 8 to 11, preferably 9 to 10, and
preferably, the base adopted to adjust pH is selected from an organic base and/or an inorganic base, the organic base is selected from triethylamine and N,N-dimethylaniline, preferably triethylamine, and the inorganic base is selected from sodium carbonate and sodium hydroxide, preferably sodium hydroxide.
